# EUROPÄISCHE PATENTSCHRIFT

(11) **EP 1 637 220 B1**
(45) Veröffentlichungstag und Bekanntmachung des Hinweises auf die Patenterteilung: **21.11.2007**
(21) Anmeldenummer: 05017170.1
(22) Anmeldetag: 06.08.2005
(51) Int. Cl.: B01J 10/00, B01J 19/26, B01J 19/18, B01J 19/00, B01F 3/04, B01F 3/08, B01F 7/28, B01F 15/00

(54) **Rührvorrichtung und Verfahren zur Durchführung einer Gas-Flüssig-Reaktion**
Mixing device and method for carrying out a gas-liquid reaction
Dispositif d'agitation et procédé permettant de conduire une réaction gaz-liquide

(30) Priorität: 18.08.2004 DE 102004039960
(43) Veröffentlichungstag der Anmeldung: 22.03.2006
(73) Patentinhaber: Bayer MaterialScience AG, 51368 Leverkusen (DE)
(72) Erfinder: Buse, Rainer, Dr., 51061 Köln (DE); Keggenhoff, Berthold, Dr., 47839 Krefeld (DE); Münnig, Jürgen, 41564 Kaarst (DE); Steffens, Friedhelm, 51373 Leverkusen (DE); Ritter, Joachim, Dr., 51373 Leverkusen (DE)

(56) Entgegenhaltungen:
- WO-A-03/028644
- DE-A1- 2 457 321
- DE-A1- 2 512 497
- DE-A1- 2 905 805
- ZLOKARNIK M ET AL: "Rohr- und Scheibenrührer - zwei leistungsfähige Rührer zur Flüssigkeitsbegasung" CHEMIE-ING.-TECHN., Bd. 39, Nr. 20, 1967, Seiten 1163-1168, XP009056521

## Beschreibung

Die Erfindung betrifft eine Rührvorrichtung, wenigstens bestehend aus einem Begasungsrührer und einem Flüssigmischer oder zwei Flüssigmischern, sowie ein Verfahren zur Durchführung von Gas-Flüssig-Reaktionen unter Verwendung der Rührvorrichtung.

Gas-Flüssig-Reaktionen treten in der chemischen Verfahrenstechnik häufig auf. Beispiele sind Oxidationen, Hydrierungen, Chlorierungen oder biochemische Reaktionen unter Sauerstoffverbrauch. Diese Reaktionen werden vielfach auch unter Zusatz einer festen Komponente, z.B. eines Katalysators, durchgeführt.

Es gibt zahlreiche Vorschläge für Reaktoren zur Durchführung derartiger Reaktionen, die oft einen Begasungsrührer zum Einmischen des gasförmigen Reaktanten vorsehen. So sind beispielsweise in M. Zlokarnik, Rührtechnik, S. 174ff, Springer-Verlag, 1999 oder in EKATO Handbook of Mixing Technology, S. HY.1ff, Ekato Rühr- und Mischtechnik GmbH, Schopfheim, Deutschland, Begasungsrührer beschrieben.

Ferner ist in EP 784 505 B ein Schlammphasenreaktor für exotherme Reaktionen, insbesondere für die Hydrierung von aromatischen Nitroverbindungen, mit einem Rührer zur Umwälzung des Reaktionsgemisches sowie einem zusätzlichen Begasungsrührer beschrieben. Der Reaktionspartner wird in unmittelbarer Nähe des Rührers, der zum Umwälzen des Reaktionsgemisches eingesetzt wird, über ein Zudosierrohr in den Reaktor geleitet. Je nach Förderrichtung und Fördercharakteristik wird der Reaktant in radialer oder axialer Richtung abgelenkt und dabei in den vom Rührer angesaugten Volumenstrom eingemischt.

Aus US 3 761 521 ist ein Verfahren sowie eine Vorrichtung zur Durchführung von kontinuierlichen Reaktionen, z.B. die Hydrierung von aromatischen Nitroverbindungen, bekannt. Dabei wird eine Reaktionsmischung gebildet, indem eine gasförmige Phase und eine zweite feste oder flüssige Phase in einem flüssigen Medium vermischt werden. Bei der Vermischung wird das Gas rasch in der flüssigen Phase dispergiert. Aus dem gerührten Reaktionsraum läuft kontinuierlich ein Teil der flüssigen Phase in einen Abscheider für den Katalysator über. Das Gas und die flüssige Phase werden über Rohre von oben dem Rührer zugeführt, wobei der Rührer über eine Hohlwelle weiteres Gas ansaugt.

In M. Assirelli, W. Bujalski, A.W. Nienow, A. Eaglesham, Intensifying Micromixing with a Rushton Turbine, 5th International Symposium on Mixing in Industrial Processes, Sevilla, Spanien, 2004, ist eine Reaktion in einem Rührreaktor beschrieben, bei der einer der Reaktanten der Reaktionsmischung nahe dem Rührer eingespeist wird. Die Zuführung des einen Reaktanten erfolgt dabei über eine Hohlwelle, von der drei gekrümmte Rohre abgehen. Die Rohre enden in vertikaler und horizontaler Richtung in einiger Entfernung von den Kanten der Rührerblätter. Der dargestellte radial fördernde Scheibenrührer hat sechs Blätter. Außerdem ist der Einsatz eines Begasungsrührers hierin nicht beschrieben.

Bei Gas-Flüssig-Reaktionen werden zur Intensivierung der Begasung auch Begasungsrührer eingesetzt, die über eine Hohlwelle mit dem Gasraum oberhalb des Flüssigkeitsspiegels verbunden sind. Die Begasungsrührer eignen sich in besonderer Weise zum Redispergieren des noch nicht vollständig abreagierten gasförmigen Reaktionspartners. In M. Zlokarnik, H. Judat, Rohr- und Scheibenrührer - Zwei leistungsfähige Rührer zur Flüssigkeitsbegasung, Chemie-Ingenieur-Technik 39, Heft 20, S. 1163-1168, 1967 [XP009056521] ist ein Rührer beschrieben, der als vierarmiger Rohrrührer ausgebildet ist. Zwei gegenüberliegende Arme saugen Gas, die beiden anderen Arme Flüssigkeit an. Die Förderleistung des Flüssigkeitsrührers fällt stark ab, wenn die Gasschleppe den nächsten Arm erreicht und umhüllt.

In BE 869 961 A wird ein Rührer in Form einer Scheibe beschrieben, wobei der Rührer mit verschiedenen Düsen für Gas und Flüssigkeit ausgestattet ist. Über die Düsen wird Gas oder Flüssigkeit unter Druck zugegeben, damit im Falle eines Rührmotorausfalles ein Absinken der Suspension für eine gewisse Zeit vermieden werden kann. Zum eigenständigen Fördern oder zum Zudosieren während des normalen Rührbetriebes ist diese Vorrichtung nicht geeignet.

Die DE 2 457 321 A1 zeigt eine weitere Vorrichtung zum Begasen von Flüssigkeiten.

Die Schwierigkeit bei Reaktoren für Gas-Flüssig-Reaktionen besteht darin, neben einer guten Verteilung der Gasphase den flüssigen Reaktanten möglichst gleichmäßig in das Reaktionsgemisch einzumischen, weil jede örtliche Überkonzentration zu Nebenproduktbildung, bei Feststoffkatalyse auch zu Katalysatordesaktivierung durch örtliche Überlastung führen kann. Eine weitere schwierige Aufgabe ist die Optimierung der Einmischung sowohl von Gas als auch von Flüssigkeit, ohne dass das Gas und die Flüssigkeit einander stören. Beispielsweise kommt es beim vierarmigen Rohrrührer, welcher z.B. aus M. Zlokarnik, H. Judat, Rohr- und Scheibenrührer - Zwei leistungsfähige Rührer zur Flüssigkeitsbegasung, Chemie-Ingenieur-Technik 39, Heft 20, S. 1163-1168, 1967 bekannt ist, durch die Ausbildung der Gasschleppe zu einem Abfall der Förderleistung des Flüssigkeitsrührers. Dieser Leistungsabfall wirkt sich auch negativ auf die Vermischung aus. Die Aufgabe der vorliegenden Erfindung besteht demnach darin, eine Rührvorrichtung bereit zu stellen, welche eine gleichmäßige Verteilung von flüssigen und ggf. gasförmigen Reaktanten in das Reaktionsgemisch erlaubt, wobei sie die Nachteile aus dem Stand der Technik vermeidet.

Gegenstand der Erfindung ist daher eine Rührvorrichtung wenigstens bestehend aus einem Begasungsrührer und einem Flüssigmischer oder zwei Flüssigmischern, welche auf einer Welle angeordnet sind und jeweils eine Zuführung und wenigstens eine Austrittsöffnung aufweisen, wobei die Austrittsöffnungen des Begasungsrührers und des Flüssigmischers oder der Flüssigmischer in einem Abstand zueinander stehen, wobei das Verhältnis a/d von Abstand a der Austrittsöffnungen zu Durchmesser d des Begasungsrührers oder Flüssigmischers 0,02 bis 0,5, vorzugsweise 0,05 bis 0,3, und das Verhältnis b/d von Abstand b der Außenkanten zu Durchmesser d des Begasungsrührers oder Flüssigmischers 0,01 bis 0,4, vorzugsweise 0,02 bis 0,2, beträgt.

Die erfindungsgemäße Rührvorrichtung umfasst wenigstens zwei Rührer. In einer ersten Ausführungsform handelt es sich um einen Begasungsrührer und einen Flüssigmischer, in einer zweiten Ausführungsform um zwei Flüssigmischer. Auch eine Rührvorrichtung bestehend aus mehr als zwei Rührern mit einer beliebigen Kombination von Flüssigmischern und/oder Begasungsrührern ist möglich. Begasungsrührer sind aus dem Stand der Technik bekannt. Prinzipiell kann jeder beliebige Begasungsrührer für die erfindungsgemäße Rührvorrichtung eingesetzt werden. Bevorzugt wird ein Rohrrührer oder Turbinenrührer eingesetzt. Unter einem Flüssigmischer im Sinne der vorliegenden Erfindung wird ein Mischer bzw. Rührer verstanden, welcher, analog zu einem Begasungsrührer, dazu dient, einen flüssigen Reaktanten einzumischen. Der Flüssigmischer weist wenigstens eine Eintrittsöffnung auf, über die ein flüssiger Reaktant zugeführt wird. Die Rührer des Flüssigmischers weisen Austrittsöffnungen auf, aus denen der flüssige Reaktant austritt. Der Flüssigmischer kann demnach beispielsweise ein Hohlrührer, insbesondere ein Rohrrührer, oder ein Pumpenlaufrad sein. Die Typen von Begasungsrührer und Flüssigmischer können beliebig kombiniert werden, z.B. Rohrrührer als Begasungsrührer und Flüssigmischer oder Turbinenrührer als Begasungsrührer und Pumpenlaufrad als Flüssigmischer oder Rohrrührer und Turbinenrührer oder Laufrad. Besonders bevorzugt sind axialfördernde Rührorgane wie Schrägblattrührer.

Der Begasungsrührer und der Flüssigmischer bzw. die beiden Flüssigmischer sind auf einer Welle angeordnet. Dementsprechend sind die beiden Rührer bzw. Mischer übereinander angeordnet, wobei der Begasungsrührer und der Flüssigmischer in beliebiger Reihenfolge übereinander angebracht sein können.

Der Begasungsrührer und der Flüssigmischer bzw. jeder der beiden Flüssigmischer weisen eine Zuführung für den Reaktanten zu dem Rührer bzw. Mischer auf. Als Zuführung kann beispielsweise die Welle dienen, indem sie als Hohlwelle ausgeführt ist. Eine Hohlwelle kann als Zuführung für einen gasförmigen oder flüssigen Reaktanten dienen. Besteht die erfindungsgemäße Rührvorrichtung aus zwei Flüssigmischern, kann die Hohlwelle auch als Zuführung für zwei flüssige Reaktanten eingesetzt werden, indem die Hohlwelle beispielsweise aus zwei konzentrisch angeordneten Rohren aufgebaut ist. Alternativ ist die Zuführung eines ersten Reaktanten von oben durch die Welle und eines zweiten Reaktanten von unten durch die Welle möglich. Wird beispielsweise über die Hohlwelle nur einer der Reaktanten zugeführt, kann ein zweiter, flüssiger oder gasförmiger Reaktant dem Begasungsrührer oder Flüssigmischer auch über eine zusätzliche Rohrleitung zugeführt werden. Dies kann beispielsweise dadurch erfolgen, dass der Begasungsrührer bzw. der Flüssigmischer mit einer Ansaugöffnung ausgestattet ist und eine Rohrleitung als Zuführung für einen Reaktanten im Bereich der Ansaugöffnung angeordnet ist. Die Rohrleitung kann entweder mit der Ansaugöffnung verbunden sein oder aber von dieser beabstandet sein.

In einer bevorzugten Ausführungsform der erfindungsgemäßen Rührvorrichtung ist ein Begasungsrührer oberhalb eines Flüssigmischers auf einer Welle angeordnet. Die Welle ist als Hohlwelle ausgeführt und als Zuführung für den Begasungsrührer vorgesehen. Der Flüssigmischer weist eine Ansaugöffnung auf, welche sich bevorzugt mittig an seiner Unterseite, d.h. an der dem Begasungsrührer abgewandten Seite, befindet. Als Zuführung für den Flüssigmischer ist eine Rohrleitung vorgesehen, wobei eine Öffnung der Rohrleitung, z.B. ein offenes Ende, im Bereich der Ansaugöffnung angeordnet ist. Im Bereich der Ansaugöffnung bedeutet hierbei, dass der Abstand a_{A} zwischen der Ansaugöffnung und der Öffnung der Rohrleitung zu dem Durchmesser d_{A} der Ansaugöffnung in einem Verhältnis a_{A}/d_{A} von maximal 3, bevorzugt 1 bis 2, steht. Die Rohrleitung kann prinzipiell aus beliebiger Richtung an die Ansaugöffnung herangeführt sein, z.B. von unten oder von der Seite.

Erfindungsgemäß stehen die Austrittsöffnungen des Begasungsrührers und des Flüssigmischers oder der Flüssigmischer in einem Abstand a zueinander, wobei das Verhältnis a/d von Abstand a zu dem Durchmesser d des Begasungsrührers oder Flüssigmischers 0,02 bis 0,5, vorzugsweise 0,05 bis 0,3, beträgt. Des Weiteren beträgt erfindungsgemäß das Verhältnis b/d von Abstand b der Außenkanten zu Durchmesser d des Begasungsrührers oder Flüssigmischers 0,01 bis 0,4, vorzugsweise 0,02 bis 0,2. Im Falle einer Rührvorrichtung bestehend aus einem Begasungsrührer und einem Flüssigmischer ist als Durchmesser d der Durchmesser d_{G} des Begasungsrührers anzusehen. Besteht die Rührvorrichtung aus zwei Flüssigmischern ist unter dem Durchmesser d der Durchmesser d_{F} desjenigen Flüssigmischers anzusehen, der den größeren Durchmesser hat.

Mit dem erfindungsgemäßen Abstand liegen die Austrittsöffnungen der beiden Rührer verhältnismäßig dicht beieinander. Sofern der erfindungsgemäße Abstand zwischen zwei benachbarten Austrittsöffnungen vorliegt, können die Austrittsöffnungen prinzipiell beliebig zueinander angeordnet sein. Sie können z.B. senkrecht übereinander liegen. Sie können jedoch auch gegeneinander versetzt angeordnet sein, so dass sich die Austrittsöffnungen des einen Rührers, eines Begasungsrührers oder eines Flüssigmischers, in Rotationsrichtung der Rührvorrichtung vor oder hinter den Austrittsöffnungen des zweiten Rührers, des Flüssigmischers, befinden. Des Weiteren können die Austrittsöffnungen radial gegeneinander versetzt sein, wenn beispielsweise die Durchmesser der beiden Rührer verschieden sind. Vorzugsweise sind die Austrittsöffnungen der beiden Rührer senkrecht übereinander angeordnet.

Der Durchmesser der beiden Rührer kann gleich oder verschieden sein. Der Durchmesser d_{F} des Flüssigmischers beträgt bevorzugt 50 bis 150 %, besonders bevorzugt 80 bis 120 %, des Durchmessers d_{G} des Begasungsrührers.

Vorzugsweise beträgt bei der erfindungsgemäßen Rührvorrichtung die Höhe des Flüssigmischers 2 bis 25 %, besonders bevorzugt 5 bis 20 %, der Höhe des Begasungsrührers.

Bei Ausführung in Form eines Rohrrührers enden die Rohre des Flüssigmischers mit einem Winkel an der strömungszugewandten Seite zur Rohrachse von vorzugsweise 30 bis 90°, besonders bevorzugt 40 bis 60°.

Die Blattanzahl des Begasungsrührers und Flüssigmischers beträgt vorzugsweise 2 bis 10, besonders bevorzugt 4 bis 8. Der Begasungsrührer und der Flüssigmischer bzw. die beiden Flüssigmischer können eine gleiche oder unterschiedliche Anzahl von Blättern aufweisen. Für eine gegebene Blattanzahl n_{G} am Begasungsrührer besitzt der Flüssigmischer vorzugsweise eine Blattanzahl n_{F} = 1 bis n_{F} = 2·n_{G}. Besonders bevorzugt ist die Blattanzahl n_{G} gleich der Blattanzahl n_{F}, bzw. im Falle von zwei Flüssigmischern besitzen vorzugsweise beide die gleiche Blattanzahl n_{F}.

Ein weiterer Gegenstand der Erfindung ist ein Verfahren zur Durchführung einer Gas-Flüssig-Reaktion unter Verwendung der erfindungsgemäßen Rührvorrichtung. Beispiele für solche Gas-Flüssig-Reaktionen sind Oxidationen, Hydrierungen, Chlorierungen oder biochemische Reaktionen unter Sauerstoffverbrauch.

Der Leistungseintrag in die erfindungsgemäße Rührvorrichtung beträgt dabei vorzugsweise 0,5 bis 15kW/m³, besonders bevorzugt 1 bis 10 kW/m³. Die Umfangsgeschwindigkeit des Begasungsrührers beträgt bevorzugt 1 bis 25 m/s, besonders bevorzugt 5 bis 20 m/s.

Die Förderleistung des Flüssigmischers wird bevorzugt auf den 1 bis 50 fachen, besonders bevorzugt auf den 2 bis 20 fachen, Volumenstrom des zugeführten Reaktanten abgestimmt.

In einer bevorzugten Ausführungsform wird die erfindungsgemäße Rührvorrichtung zur Hydrierung von aromatischen Nitroverbindungen, insbesondere Nitrobenzol und Dinitrotoluol, eingesetzt.

Der Vorteil der erfindungsgemäßen Rührvorrichtung liegt darin, dass das Einmischen zweier flüssiger oder eines flüssigen und eines gasförmigen Reaktanten jeweils von einem eigenen, auf die spezifische Aufgabe zu optimierenden Mischer bzw. Rührer durchgeführt wird, wobei die beiden Mischer bzw. Rührer auf einer Welle angeordnet sind. Das Einmischen der Reaktanten wird durch die erfindungsgemäße Rührvorrichtung mit minimaler gegenseitigen Beeinflussung bzw. Störung der Mischprozesse erreicht. Die erfindungsgemäße Rührvorrichtung erlaubt eine bessere Mikromischung und damit eine deutlich reduzierte Nebenproduktbildung.

Nachfolgend wird die Erfindung anhand der beigefügten Zeichnungen näher erläutert. Es zeigen

| | |
|---|---|
| Figur 1 | eine erste Ausführungsform der erfindungsgemäßen Rührvorrichtung |
| Figur 1a | einen Schnitt durch die Rührvorrichtung gemäß Figur 1 entlang der Linie A-B |
| Figur 1b | einen Schnitt durch die Rührvorrichtung gemäß Figur 1 entlang der Linie C-D |
| Figur 2 | eine zweite Ausführungsform der erfindungsgemäßen Rührvorrichtung |
| Figur 2a | einen Schnitt durch die Rührvorrichtung gemäß Figur 1 entlang der Linie A-B |
| Figur 2b | einen Schnitt durch die Rührvorrichtung gemäß Figur 1 entlang der Linie C-D |
| Figur 3 | eine schematische Darstellung eines Reaktors zur Durchführung des erfindungsgemäßen Verfahrens unter Verwendung einer Rührvorrichtung gemäß Figur 1. |

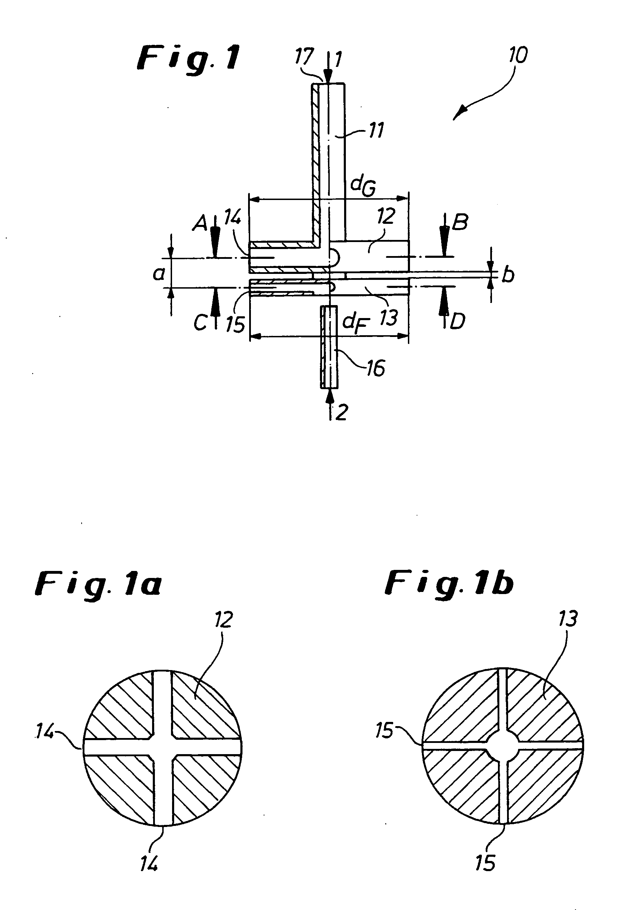

In Figur 1 ist eine erste Ausführungsform einer Rührvorrichtung 10, umfassend einen Begasungsrührer 12 in Form eines Turbinenrührers und einen Flüssigmischer 13 in Form eines Pumpenlaufrads, schematisch dargestellt. Der Begasungsrührer 12 und der Flüssigmischer 13 sind auf einer Hohlwelle 11 angeordnet, wobei sich der Begasungsrührer 12 oberhalb des Flüssigmischers 13 befindet. Die Hohlwelle 11 dient als Zuführung 17 für einen gasförmigen Reaktanten 1. Der gasförmige Reaktant 1 tritt über Austrittsöffnungen 14 aus dem Begasungsrührer 12 aus. Über eine Zuführung 16 in Form einer Rohrleitung wird der flüssige Reaktant 2 dem Flüssigmischer 13 zugeführt. Die Zuführung 16 liegt im Bereich einer Ansaugöffnung (nicht dargestellt) des Flüssigmischers 13. Über Austrittsöffnungen 15 tritt der flüssige Reaktant 2 aus dem Flüssigmischer 13 aus.

In Figur 1 bezeichnet a den Abstand zwischen einer Austrittsöffnung 14 des Begasungsrührers 12 und einer Austrittsöffnung 15 des Flüssigmischers 13. Es handelt sich dabei um den Abstand der Mittelpunkte der Austrittsöffnungen 14, 15 zueinander. Mit d_{G} ist der Durchmesser des Begasungsrührers 12, mit d_{F} der Durchmesser des Flüssigmischers 13 bezeichnet. Ferner bezeichnet b den Abstand zwischen den Außenkanten des Begasungsrührers 12 und des Flüssigmischers 13.

Figur 1a zeigt einen Schnitt A-B durch den Begasungsrührer 12 der Rührvorrichtung 10 gemäß Figur 1. Die dargestellte Ausführungsform weist 4 Austrittsöffnungen 14 für den gasförmigen Reaktanten auf. Analog ist in Figur 1b ein Schnitt C-D durch den Flüssigmischer 13 gemäß Figur 1 gezeigt. Der Flüssigmischer 13 weist ebenfalls 4 Austrittsöffnungen 15 für den flüssigen Reaktanten auf. Die Austrittsöffnungen 14, 15 der beiden Rührer 12, 13 sind übereinander angeordnet, wobei die beiden Rührer 12, 13.

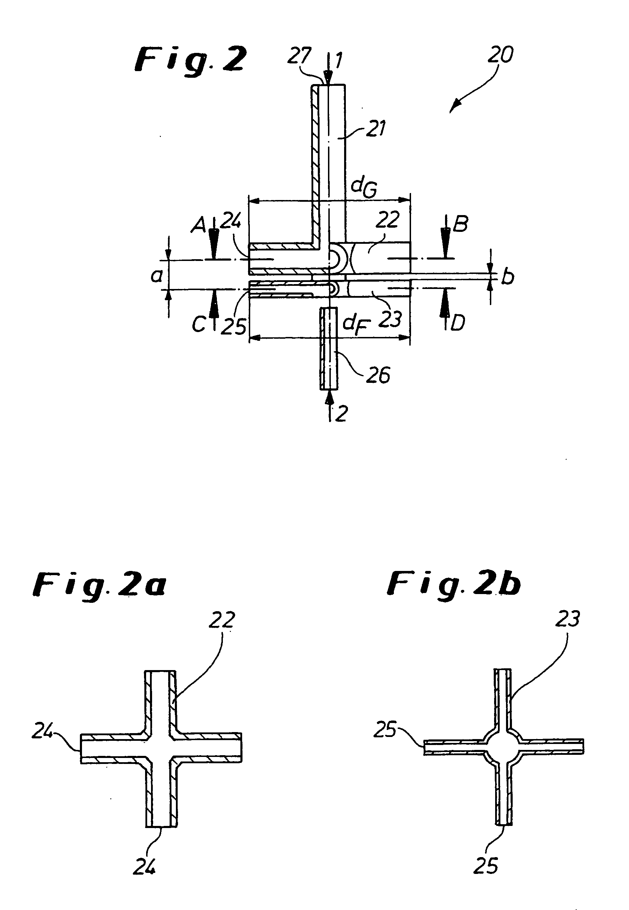

In Figur 2 ist eine zweite Ausführungsform einer Rührvorrichtung 20, umfassend einen Begasungsrührer 22 und einen Flüssigmischer 23, schematisch dargestellt. Der Begasungsrührer 22 und der Flüssigmischer 23 sind als Rohrrührer ausgeführt. Der Begasungsrührer 22 und der Flüssigmischer 23 sind auf einer Hohlwelle 21 angeordnet, wobei sich der Begasungsrührer 22 oberhalb des Flüssigmischers 23 befindet. Die Hohlwelle 21 dient als Zuführung 27 für einen gasförmigen Reaktanten 1. Der gasförmige Reaktant 1 tritt über Austrittsöffnungen 24 aus dem Begasungsrührer 22 aus. Über eine Zuführung 26 in Form einer Rohrleitung wird der flüssige Reaktant 2 dem Flüssigmischer 23 zugeführt. Die Zuführung 26 liegt im Bereich einer Ansaugöffnung (nicht dargestellt) des Flüssigmischers 23. Über Austrittsöffnungen 25 tritt der flüssige Reaktant 2 aus dem Flüssigmischer 23 aus.

Figur 2a zeigt einen Schnitt A-B durch den Begasungsrührer 22 der Rührvorrichtung 20 gemäß Figur 2. Die dargestellte Ausführungsform weist 4 Austrittsöffnungen 24 für den gasförmigen Reaktanten auf. Analog ist in Figur 2b ein Schnitt C-D durch den Flüssigmischer 23 gemäß Figur 1 gezeigt. Der Flüssigmischer 23 weist ebenfalls 4 Austrittsöffnungen 25 für den flüssigen Reaktanten auf. Die Austrittsöffnungen 24, 25 der beiden Rührer 22, 23 sind übereinander angeordnet, wobei die beiden Rührer 22, 23.

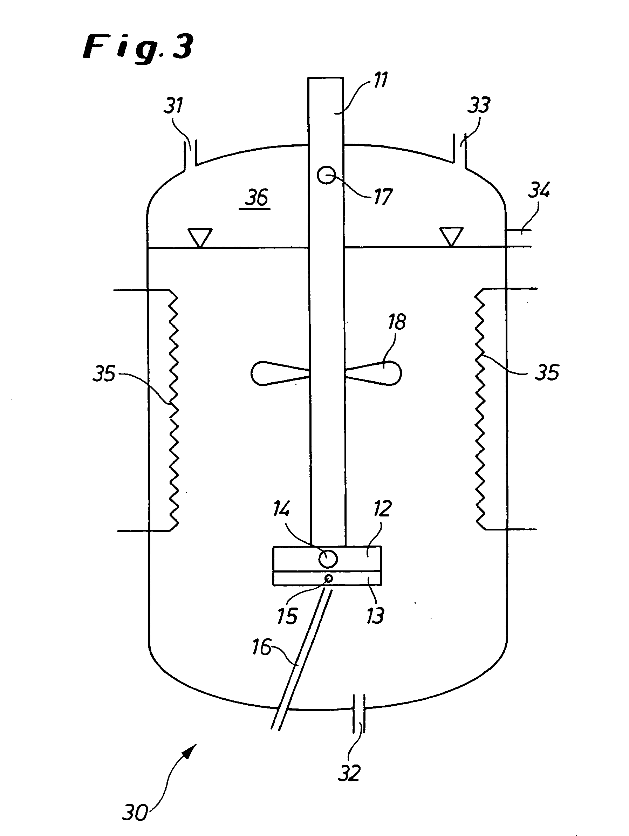

Figur 3 zeigt schematisch einen Reaktor 30 für Gas-Flüssig-Reaktionen entsprechend dem erfindungsgemäßen Verfahren. Der Reaktor 30 weist Einlässe 31, 32 für einen gasförmigen Reaktanten sowie einen Auslass 33 für das Restgas auf. Das Reaktionsprodukt tritt über einen Produktauslass 34 aus dem Reaktor 30 aus. Weiterhin können Wärmeabführeinrichtungen 35 in dem Reaktor 30 vorgesehen sein. Oberhalb des Begasungsrührers 12 ist ein zusätzliches Rührblatt 18 zur Durchmischung des Reaktorinhalts vorgesehen. Die Rührwelle 11 hat im Gasraum 36 oberhalb des Produktablaufes 34 eine Gasansaugöffnung 17, über die Gas aus dem Gasraum 36 angesaugt und über den Begasungsrührer 12 umgewälzt wird.

Der in Figur 3 dargestellte Reaktor 30 eignet sich beispielsweise für die Hydrierung von aromatischen Nitroverbindungen, insbesondere Nitrobenzol und Dinitrotoluol. Hierbei wird in einem Reaktor 30 Wasserstoff bei einem Druck von 10 bis 40 bar eingesetzt. Die Frischwasserstoffzufuhr kann über Zuleitungen 31, 32 erfolgen. Die Umwälzung des Wasserstoffs erfolgt durch den Begasungsrührer 12. Die aromatische Nitroverbindung wird über eine Zuführleitung 16 in den Flüssigmischer 13 eingespeist. Als Feststoffkatalysator ist in der Reaktionsmasse ein geeigneter Hydrierkatalysator, wie z.B. Edelmetalle oder Nickel auf Trägerteilchen wie Kohle, SiO₂, Al₂O₃ oder Raney-Nickel-Katalysatoren, dispergiert. Das gebildete Rohprodukt wird kontinuierlich am Überlauf 34 abgezogen, so dass ein gleichbleibender Flüssigkeitsspiegel gehalten wird. Die Reaktionswärme wird über die Wärmetauscher 35 abgeführt. Die Reaktionstemperatur wird je nach Art der Wärmeabfuhr und des Katalysators im Bereich von 80 bis 250°C, bevorzugt 120 bis 180°C gehalten.

### Beispiele

In einem Modellreaktor mit einem Innendurchmesser von 390 mm wurden zwei Versuche mit einem Modellstoffsystem durchgeführt. Das Modellstoffsystem bestand aus den drei Edukten (Ausgangsstoffen) NaOH, Dimethoxypropan und HCl. In einem ersten Versuch (Vergleichsbeispiel) wurde HCl, wie in EP 784 505 A (Schlammphasenreaktor) beschrieben, über eine festinstallierte Lanze zugeführt. In einem zweiten Versuch (Ausführungsbeispiel) wurde HCl über einen erfindungsgemäßen Flüssig-Mischer zugeführt.

Die zudosierte Komponente HCl reagiert sehr schnell (Ionenreaktion) mit dem ersten Edukt NaOH, während die Reaktion mit dem zweiten Edukt Dimethoxypropan nur in den Zonen stattfindet, die bereits an dem ersten Edukt NaOH durch schlechte Vermischung verarmt sind. Die Menge des in der zweiten Reaktion gebildeten Produktes ist ein Maß für die Güte der Vermischung. Das Modellstoffsystem ist repräsentativ für viele chemische Reaktionen mit Neben- oder Folgeproduktbildung.

Der Begasungsrührer war bei beiden Versuchen identisch. Er war über eine Hohlwelle mit dem Gasraum oberhalb des Füllstandes verbunden. Der Durchmesser des Begasungsrührers (6x60° Schrägblattrührer) betrug 100 mm, die Höhe 25 mm.

In dem Vergleichsbeispiel wurde als festinstallierte Lanze ein Rohr 6x1 mm gewählt. Die Öffnung der Lanze war 5 mm oberhalb der Außenkante des Begasungsrührers installiert.

Der bei den erfindungsgemäß durchgeführten Versuchen (Ausführungsbeispiel) eingesetzte, als Rohrrührer ausgebildete Flüssigmischer hatte ebenfalls einen Durchmesser von 100 mm, die Höhe betrug 3,2 mm (Rohr 3,2x0,6 mm) bei einem lichten Abstand von 5 mm zur Unterkante des Begasungsrührers. Die Blattanzahl des Begasungsrührers sowie die Rohranzahl des Flüssigmischers war 6, wobei zwischen den Kanten ein tangentialer Winkel von 0° eingestellt war. Die Austrittsöffnungen des Flüssigmischers waren entgegen der Strömungsrichtung (Rotationsrichtung des Rührers) um 45° gegen die Rohrachse angeschrägt.

Der Abstand a der Austrittsöffnungen betrug 5 mm bei einem Durchmesser d_{G} des Begasungsrührers von 100 mm.

Die Drehzahl der Rührvorrichtung wurde von 600 bis 1400 U/min variiert. Die Luftförderung über den Begasungsrührer setzte bei ca. 800 U/min ein. Der Leistungseintrag betrug 0,5 bis 4 kW/m³. Die Umfangsgeschwindigkeit lag bei 3 bis 8 m/s.

NaOH wurde als 0,105 molare, Dimethoxypropan als 0,1 molare wässrige Lösung im Versuchsbehälter (Durchmesser 390 mm) vorgelegt. HCl wurde als 8 molare Lösung solange zugegeben, bis der Überschuss an NaOH nur noch 5 Mol%) betrug. Die Dosierrate wurde in beiden Experimenten so gewählt, dass sich eine Zudosierzeit von ca. 6 Minuten ergab, weil bei Zudosierzeiten von 2 bis 10 Minuten unter sonst gleichen Bedingungen keinerlei Beeinflussungen des Mischergebnisses beobachtet wurden.

Im Vergleichsbeispiel mit festinstallierter Lanze gemäß EP 784 505 A war die Lanze 5 mm oberhalb der Außenkante am äußeren Rand des Begasungsrührers installiert. Im Vergleichsbeispiel wurden unabhängig von der Drehzahl Aceton-Massenanteile von ca. 2,2 g/kg gemessen.

Im Ausführungsbeispiel wurde unter sonst identischen Bedingungen die HCl über den mitrotierenden Flüssigmischer zugegeben. Bei Drehzahlen bis 800 U/min wurden Aceton-Massenanteile von ca. 1,9 g/kg nachgewiesen, während bei höheren Drehzahlen dieser Wert signifikant sank und bei 1200 U/min nur noch bei 1,43 g/kg lag.

Im untersuchten Modellsystem konnten somit unter sonst identischen Bedingungen durch die Veränderung der Zudosierung der Säure im Sinne der Erfindung im Vergleich zum Zudosieren nach dem Stand der Technik mit feststehendem Zuleitrohr (Lanze) am Außendurchmesser 5mm oberhalb der Oberkante des Begasungsrührers überraschend die Konzentration des gebildeten Reaktionsproduktes der zweiten Reaktion um 65% gesenkt werden.

## Patentansprüche

1. Rührvorrichtung wenigstens bestehend aus einem Begasungsrührer (12) und einem Flüssigmischer (13) oder zwei Flüssigmischern, welche auf einer Welle (11) angeordnet sind und jeweils eine Zuführung (17, 16) und wenigstens eine Austrittsöffnung (14, 15) aufweisen, wobei die Austrittsöffnungen (14, 15) des Begasungsrührers (12) und des Flüssigmischers (13) oder der Flüssigmischer in einem Abstand zueinander stehen, **dadurch gekennzeichnet, dass** das Verhältnis a/d von Abstand a der Austrittsöffnungen (14, 15) zu Durchmesser d des Begasungsrührers (12) oder Flüssigmischers (13) 0,02 bis 0,5 und das Verhältnis b/d von Abstand b der Außenkanten zu Durchmesser d des Begasungsrührers (12) oder Flüssigmischers (13) 0,01 bis 0,4 beträgt.

2. Rührvorrichtung nach Anspruch 1, **dadurch gekennzeichnet, dass** ein Begasungsrührer (12) und ein Flüssigmischer (13) vorgesehen sind, wobei die Welle (11) als Hohlwelle ausgeführt und als Zuführung (17) für den Begasungsrührer (12) vorgesehen ist, der Flüssigmischer (13) eine Ansaugöffnung aufweist und als Zuführung (16) für den Flüssigmischer eine Rohrleitung vorgesehen ist, welche im Bereich der Ansaugöffnung angeordnet ist.

3. Rührvorrichtung nach einem der Ansprüche 1 oder 2, **dadurch gekennzeichnet, dass** der Durchmesser d_{F} des Flüssigmischers (13) 50 bis 150 %, bevorzugt 80 bis 120 %, des Durchmessers d_{G} des Begasungsrührers (12) beträgt.

4. Rührvorrichtung nach einem der Ansprüche 1-3, **dadurch gekennzeichnet, dass** die Höhe des Flüssigmischers (13) 2 bis 25 %, bevorzugt 5 bis 20 %, der Höhe des Begasungsrührers (12) beträgt.

5. Rührvorrichtung nach einem der Ansprüche 1-4, **dadurch gekennzeichnet, dass** die Blattanzahl des Begasungsrührers (12) und des Flüssigmischers (13) 2 bis 10, bevorzugt 4 bis 8, beträgt.

6. Rührvorrichtung nach einem der Ansprüche 1-5, **dadurch gekennzeichnet, dass** der Begasungsrührer (12) ein Rohrrührer oder Turbinenrührer ist.

7. Rührvorrichtung nach einem der Ansprüche 1-6, **dadurch gekennzeichnet, dass** der Flüssigmischer (13) ein Hohlrührer, insbesondere ein Rohrrührer, oder ein Pumpenlaufrad ist.

8. Verfahren zur Durchführung einer Gas-Flüssig-Reaktion unter Verwendung einer Rührvorrichtung nach einem der Ansprüche 1-7.

9. Verfahren zur Hydrierung von aromatischen Nitroverbindungen unter Verwendung einer Rührvorrichtung nach einem der Ansprüche 1-7.

## Claims

1. Stirring device at least comprising a gassing stirrer (12) and a liquid mixer (13) or two liquid mixers, which are arranged on a shaft (11) and each have a feed (17, 16) and at least one exit opening (14, 15), wherein the exit openings (14, 15) of the gassing stirrer (12) and of the liquid mixer (13) or the liquid mixers are at a distance from one another, **characterized in that** the ratio a/d of the distance a between the exit openings (14, 15) to the diameter d of the gassing stirrer (12) or liquid mixer (13) is 0.02 to 0.5 and the ratio b/d of the distance b between the outer edges to the diameter d of the gassing stirrer (12) or liquid mixer (13) is 0.01 to 0.4.

2. Stirring device according to claim 1, **characterized in that** a gassing stirrer (12) and a liquid mixer (13) are provided, wherein the shaft (11) is constructed as a hollow shaft and is provided as the feed (17) for the gassing stirrer (12), the liquid mixer (13) has a suction opening and a tube line which is arranged in the region of the suction opening is provided as the feed (16) for the liquid mixer.

3. Stirring device according to one of claims 1 to 2, **characterized in that** the diameter d_{F} of the liquid mixer (13) is 50 to 150 %, preferably 80 to 120 % of the diameter d_{G} of the gassing stirrer (12).

4. Stirring device according to one of claims 1-3, **characterized in that** the height of the liquid mixer (13) is 2 to 25 %, preferably 5 to 20 % of the height of the gassing stirrer (12).

5. Stirring device according to one of claims 1-4, **characterized in that** the number of blades of the gassing stirrer (12) and of the liquid mixer (13) is 2 to 10, preferably 4 to 8.

6. Stirring device according to one of claims 1-5, **characterized in that** the gassing stirrer (12) is a tubular stirrer or turbine stirrer.

7. Stirring device according to one of claims 1-6, **characterized in that** the liquid mixer (13) is a hollow stirrer, in particular a tubular stirrer, or a pump impeller.

8. Process for carrying out a gas-liquid reaction using a stirring device according to one of claims 1-7.

9. Process for the hydrogenation of aromatic nitro compounds using a stirring device according to one of claims 1-7.

## Revendications

1. Dispositif d'agitation au moins composé d'un agitateur de gazage (12) et d'un mélangeur de liquide (13) ou de deux mélangeurs de liquide disposés sur un arbre (11) et comportant chacun une conduite d'alimentation (17, 16) et au moins un orifice d'évacuation (14, 15), lesdits orifices d'évacuation (14, 15) de l'agitateur de gazage (12) et du mélangeur de liquide (13) ou des mélangeurs de liquide étant espacés entre eux, **caractérisé en ce que** le rapport a/d entre l'espacement a des orifices d'évacuation (14, 15) et le diamètre d de l'agitateur de gazage (12) ou du mélangeur de liquide (13) est compris entre 0,02 et 0,5, et **en ce que** le rapport b/d entre l'espacement b des bords extérieurs et le diamètre d de l'agitateur de gazage (12) ou du mélangeur de liquide (13) est compris entre 0,01 et 0,4.

2. Dispositif d'agitation selon la revendication 1,
**caractérisé en ce que** sont prévus un agitateur de gazage (12) et un mélangeur de liquide (13), l'arbre (11) étant réalisé comme arbre creux et prévu comme amenée (17) pour l'agitateur de gazage (12), le mélangeur de liquide (13) comportant un orifice d'aspiration et une conduite étant prévue comme amenée (16) pour le mélangeur de liquide, disposée au niveau de l'orifice d'aspiration.

3. Dispositif d'agitation selon la revendication 1 ou la revendication 2, **caractérisé en ce que** le diamètre d_{F} du mélangeur de liquide (13) est compris entre 50 % et 150 %, de préférence entre 80 % et 120 % du diamètre d_{G} de l'agitateur de gazage (12).

4. Dispositif d'agitation selon l'une des revendications 1 à 3, **caractérisé en ce que** la hauteur du mélangeur de liquide (13) est comprise entre 2 % et 25 %, de préférence entre 5 % et 20 % de la hauteur de l'agitateur de gazage (12).

5. Dispositif d'agitation selon l'une des revendications 1 à 4, **caractérisé en ce que** le nombre de pales de l'agitateur de gazage (12) et du mélangeur de liquide (13) est compris entre 2 et 10, de préférence entre 4 et 8.

6. Dispositif d'agitation selon l'une des revendications 1 à 5, **caractérisé en ce que** l'agitateur de gazage (12) est un agitateur tubulaire ou un agitateur de turbine.

7. Dispositif d'agitation selon l'une des revendications 1 à 6, **caractérisé en ce que** le mélangeur de liquide (13) est un agitateur creux, en particulier un agitateur tubulaire, ou une roue de pompe.

8. Procédé pour l'exécution d'une réaction gaz-liquide recourant à un dispositif d'agitation selon l'une des revendications 1 à 7.

9. Procédé pour l'hydrogénation de composés nitrés aromatiques recourant à un dispositif d'agitation selon l'une des revendications 1 à 7.
